(19) Europäisches Patentamt

European Patent Office

Office européen des brevets

(11) EP 0 515 346 B1

## (12) FASCICULE DE BREVET EUROPEEN

(45) Date de publication et mention
de la délivrance du brevet:
**28.02.1996 Bulletin 1996/09**

(51) Int. Cl.$^6$: **C02F 1/48**

(21) Numéro de dépôt: **92870077.2**

(22) Date de dépôt: **22.05.1992**

(54) **Procédé et appareil pour modifier la formation de cristaux par l'action d'un champ électrique**

Verfahren und Apparat zum Modifizieren der Bildung von Kristallen durch ein elektrisches Feld

Method and apparatus for modifying the formation of cristals by means of an electric field

(84) Etats contractants désignés:
**BE CH DE ES FR GB IT LI NL PT SE**

(30) Priorité: **22.05.1991 BE 9100479**

(43) Date de publication de la demande:
**25.11.1992 Bulletin 1992/48**

(73) Titulaire: **DELFORGE S.A.**
**1341 Ottignies-Louvain-La-Neuve (BE)**

(72) Inventeur: **Delforge, Gérard**
**1341 Ottignies-Louvain-La-Neuve (BE)**

(74) Mandataire: **De Palmenaer, Roger et al**
**B-1040 Bruxelles (BE)**

(56) Documents cités:
**WO-A-88/05763**          **WO-A-91/05971**
**CH-A- 185 964**          **DE-A- 838 721**

## Description

La présente invention est relative à un procédé de traitement d'un milieu liquide, solide ou gazeux, en particulier un milieu aqueux pour modifier, voire orienter, la formation de cristaux (modification de la morphologie de cristaux), en particulier de $CaCO_3$.

On connaît par le brevet belge 901.884 un appareil électrique anti-tartre agissant par induction. Ce brevet enseigne de façon générale l'utilisation des effets physiques d'ondes électromagnétiques et de champs électriques pulsés pour réduire ou supprimer des incrustations de tartre dans les conduites, réservoirs, chaudières, etc.

Selon ce document, l'induction d'un champs électrique pulsé dans le liquide provoque une modification des charges qui influence la structure des cristaux de carbonate de calcium qui se forment lors de l'évaporation de gaz carbonique.

Le document EP-A-0 402 375 enseigne un générateur d'impulsions électroniques pour réduire la formation d'incrustations de sels sur une paroi en contact avec un liquide. Le générateur produit des salves de signaux alimentant un moyen couplé avec ladite paroi pour transmettre au liquide des chocs électriques répétés. Pour chaque salve de signaux, chaque signal est conformé pour que sa forme d'onde présente un flanc avant variant de façon instantanée entre un niveau de base du signal et une amplitude de crête et un flanc arrière comprenant un tronçon variant de façon instantanée entre ladite amplitude de crête et une amplitude de niveau inférieur, un palier de niveau constant correspondant à ladite amplitude de niveau inférieur, et un tronçon variant de façon instantanée entre ladite amplitude de niveau inférieur et le niveau de base.

Un tel générateur émet donc un signal présentant une phase de niveau supérieur et une phase de niveau inférieur, ainsi qu'un pic d'intensité lorsque le signal s'écarte de la phase de niveau inférieur.

On connaît également un appareil vendu sous la marque Deltaqua ® en 1986 utilisant l'induction d'un champ électrique pulsé pour réduire ou supprimer des incrustations de tartre dans des conduites. Le champ est créé entre deux capacitances qui reçoivent des signaux électriques rectangulaires présentant une première phase dans laquelle le signal est voisin d'un niveau supérieur et une deuxième phase dans laquelle le signal est proche d'un niveau inférieur, ledit signal comprenant en outre un pic d'intensité (supérieur à l'intensité du niveau supérieur) juste après que le signal s'écarte de la deuxième phase et un creux d'intensité (inférieur à l'intensité du niveau inférieur) juste après que le signal s'écarte de la première phase.

Un tel appareil ne permet de traiter que des conduites de faible diamètre, diamètre maximum de 5 à 8 cm. Cet appareil est toutefois inadapté pour traiter des conduites de plus grand diamètre et donc des débits importants tels que ceux requis dans les installations industrielles.

L'état de la technique ne décrit pas un procédé de traitement d'un milieu aqueux dans lequel on soumet ledit milieu à l'action d'un champ créé entre deux moyens de transfert, électrodes ou capacitances qui reçoivent des signaux électriques sensiblement rectangulaires comprenant une première phase dans laquelle le signal est voisin d'un niveau supérieur et une deuxième phase dans laquelle le signal est voisin d'un niveau inférieur, lesdits signaux présentant lorsqu'ils sont voisins du niveau supérieur ou du niveau inférieur, une onde de potentiel amortie, ladite onde passant par un niveau maximal de potentiel et un niveau minimum de potentiel, la différence de potentiel entre ledit niveau maximum et ledit niveau minimum étant comprise entre 10 et 35 V, tandis que le temps de vie de l'onde amortie est compris entre 100 nanosecondes et 100 µs pour une onde rectangulaire de fréquence comprise entre 1000 Hz et 30.000 Hz.

Le demandeur a remarqué que grâce à la présence de cette onde amortie lorsque les signaux sont voisins d'un desdits niveaux, il était possible de contrôler la nucléation et/ou la croissance de cristaux et/ou leur morphologie.

En particulier, le demandeur a remarqué qu'à l'aide de telles variations, il était possible d'orienter les cristaux de $CaCO_3$ vers une forme dentitritique.

Le demandeur a encore remarqué que les cristaux formés par le procédé suivant l'invention étaient dans une forme inapte à former des incrustations de tartre (dans des canalisations, échangeurs, etc).

De préférence, lesdits signaux présentent lorsqu'ils sont voisins du niveau inférieur une onde amortie. Toutefois, dans une forme de réalisation, les signaux présentent lorsqu'ils sont voisins du niveau inférieur et du niveau supérieur une onde amortie.

Selon une particularité du procédé suivant l'invention, les signaux rectangulaires sont à flancs raides. De tels signaux sont, par exemple, des signaux pour lesquels le passage du signal d'un niveau inférieur vers le niveau supérieur ou inversément est effectué sur une période de temps inférieure à 200 nanosecondes, de préférence inférieure à 50 nanosecondes.

Dans une forme de réalisation du procédé suivant l'invention, le signal électrique est une tension ou différence de potentiel d'une source de courant.

De façon avantageuse, les signaux correspondent à la superposition d'une onde rectangulaire de fréquence comprise entre 1.000 et 30.000 Hz, et d'une onde sinusoïdale amortie de fréquence supérieure à 100.000 Hz, de préférence comprise entre 1 MHz et 15 MhZ.

Dans une forme de réalisation préférée, l'amortissement de l'onde sinusoïdale est tel qu'après 5 périodes de ladite onde, l'amplitude de la variation est inférieure à 10 % de celle de la variation initiale.

Dans une forme de réalisation avantageuse, pour chaque phase de l'onde rectangulaire, cette dernière est associée à une seule onde sinusoïdale amortie.

Ainsi, la fréquence de l'onde amortie est supérieure à celle de l'onde rectangulaire, une onde amortie étant émise pour chaque phase de l'onde rectangulaire, le temps de vie de l'onde amortie étant compris entre 100 nanosecondes et 100 µs.

Dans des exemples de réalisation du procédé suivant l'invention, la différence de potentiel existant entre le niveau inférieur et le niveau supérieur de l'onde rectangulaire est comprise entre 5 et 200 V, de préférence entre 12 et 60 V, tandis que les ondes amorties sont des ondes dont les variations sont situées dans une bande s'étendant entre un niveau minimum et un niveau maximum, la différence de potentiel entre lesdits niveaux étant comprise entre 10 et 35 V.

La présente invention a encore pour objet un générateur de signaux pour la mise en oeuvre d'un procédé suivant l'invention et un générateur de variation de potentiel d'une source de courant pour ledit générateur de signaux.

La présente invention a encore pour objet un générateur, en particulier électronique pour la mise en oeuvre d'un procédé suivant l'invention. Le générateur comprend :

- un premier moyen transformant un signal d'une source de courant en une onde sensiblement rectangulaire ;
- un deuxième moyen transformant un signal d'une source de courant en une onde amortie ;
- un moyen de superposition de l'onde rectangulaire et de l'onde amortie, et
- un système relié auxdits premier et deuxième moyens et au moyen de superposition de manière à ce que, lorsqu'un premier capteur du système détecte le passage du niveau inférieur au niveau supérieur ou inversement de l'onde rectangulaire, il commande une porte pour permettre l'envoi de l'onde amortie vers le moyen de superposition et de manière à ce que, lorsqu'un deuxième capteur détecte un niveau de variation de l'onde amortie inférieure à un niveau prédéterminé, le deuxième capteur commande une porte de manière à couper l'envoi de l'onde amortie vers le moyen de superposition.

Dans une forme de réalisation, le générateur comprend un commutateur permettant le passage du signal d'un niveau inférieur vers le niveau supérieur ou inversement sur une période de temps inférieure à 50 nanosecondes.

D'autres particularités et détails de l'invention ressortiront de la description détaillée suivante dans laquelle il est fait référence aux dessins ci-annexés.

Dans ces dessins :

- la figure 1 est une vue schématique d'un générateur suivant l'invention placé dans une canalisation ;
- la figure 2 est un diagramme montrant un signal généré par le générateur, et
- la figure 3 montre un dispositif combinant le traitement suivant l'invention à un autre traitement.

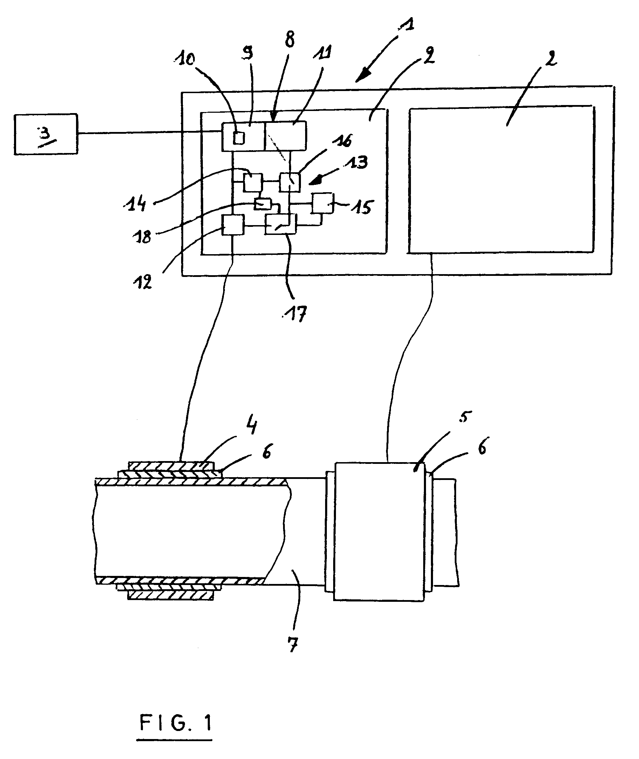

La figure 1 montre un générateur 1 suivant l'invention. Ce générateur comporte pour chaque moyen de transfert un générateur de signaux 2 relié, d'une part, à une source de courant 3, avantageusement une alimentation électrique isolée galvaniquement du secteur et assurant une tension continue, par exemple de 12 Volts, et, d'autre part, à deux moyens de transfert 4,5. Ces moyens de transfert 4,5 sont des manchons entourant une canalisation 7 d'eau, une couche de diélectrique 6 étant placée entre la canalisation 7 et chacun desdits moyens de transfert 4,5. La canalisation si elle est métallique (l'eau à traiter dans les autres cas) sert d'armature commune aux condensateurs formés par les électrodes et le diélectrique.

Le générateur de signaux, par exemple pour le moyen de transfert 4, comprend une unité de transformation 8 du signal provenant de la source de courant en des signaux électriques sensiblement rectangulaires. Cette unité 8 comporte :

- une première unité 9 générant une onde rectangulaire grâce à un commutateur 10 permettant le passage du signal du niveau inférieur vers le niveau supérieur en moins de 50 nanosecondes ;
- une deuxième unité 11 générant une onde sinusoïdale amortie, et
- une unité de superposition 12 de l'onde rectangulaire et de l'onde sinusoïdale amortie.

L'unité de transformation 8 comprend. également un système 13 relié aux unités 9 et 11 ainsi qu'à l'unité de superposition 12.

Ce système 13 comprend un premier capteur 14 qui détecte le passage du niveau inférieur au niveau supérieur ou inversément de l'onde rectangulaire et un deuxième capteur 15 détectant le niveau de variation de l'onde sinusoïdale amortie. Le premier capteur 14 commande une porte 16, de manière à permettre le passage par cette porte 16 de l'onde sinusoïdale lorsqu'il a détecté un changement de niveau de l'onde rectangulaire. Le deuxième capteur 15 commande une porte 17 de manière à couper l'envoi de l'onde sinusoïdale vers l'unité de superposition 12 lorsque le deuxième capteur détecte un niveau de variation de l'onde amortie inférieure à un niveau prédéterminé. De cette manière, il est possible d'associer une seule onde amortie pour chaque phase de l'onde rectangulaire (phase I : niveau inférieur, phase II : niveau supérieur).

Le système 13 comprend également un dispositif 18 de remise de la porte dans un état permettant le passage d'une onde amortie vers l'unité de superposition, par exemple dès que le capteur 14 détecte un changement de niveau de l'onde rectangulaire.

Il va de soi que le capteur 14 peut également commander le début de l'émission d'ondes sinusoïdales.

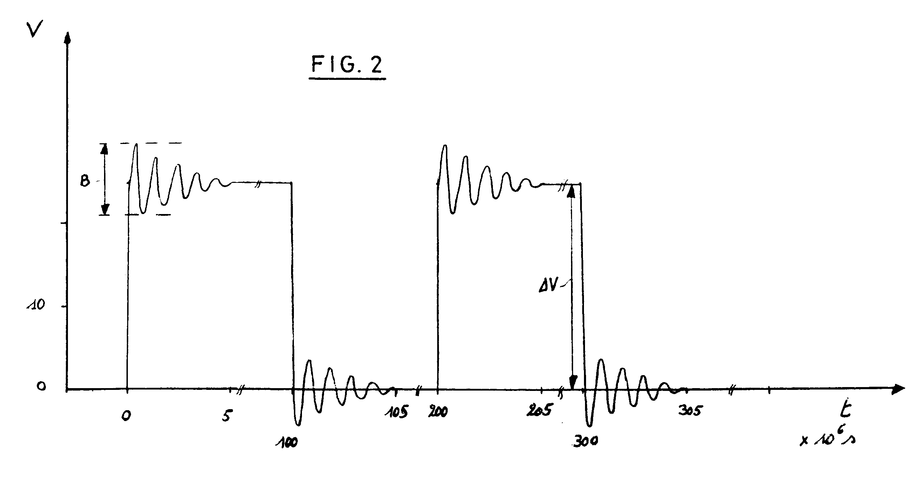

La figure 2 montre un diagramme du signal obtenu par le générateur de la figure 1.

La fréquence de l'onde rectangulaire était de 10.000 Hz tandis que celle de l'onde sinusoïdale était de 2 MHz. La différence de potentiel V entre le niveau inférieur et le niveau supérieur était de 25 Volts, tandis que l'onde sinusoïdale amortie présentait des variations de potentiel dans une bande s'étendant entre un niveau minimum et un niveau maximum, la différence de potentiel B entre lesdits deux niveaux étant de 10 Volts (voir figure 2).

Les moyens de transfert recevaient des signaux déphasés, c'est-à-dire lorsque le moyen de transfert 4 reçoit un signal dont le niveau est voisin du niveau supérieur de l'onde rectangulaire, le moyen de transfert 5 reçoit un signal dont le niveau est voisin du niveau inférieur de l'onde rectangulaire.

L'onde sinusoïdale était amortie en $5 \cdot 10^{-6}$ seconde (après $5 \cdot 10^{-6}$ sec, la variation de l'onde était inférieure à 5% de la variation initiale).

Des tests ont été effectués à l'aide du générateur montré à la figure 1. La canalisation métallique avait un diamètre de 50 mm, tandis que la vitesse d'écoulement de l'eau dans la canalisation était de 10 litres/heure.

Le tableau suivant donne le nombre de particules, en fonction de leur granulométrie, présentes dans un échantillon de 5 ml d'eau non traitée, traitée, non traitée mais chauffée à 75°C et enfin traitée et chauffée à 75°C (chauffage à 75°C pendant 10 minutes).

| Nombre de particules | | | | |
|---|---|---|---|---|
| granulométrie | eau non traitée | eau non traitée + chauffée | eau traitée | eau traitée + chauffée |
| 0 - 2 µ | 769 | 4027 | 2887 | 2980 |
| 2 - 5 µ | 241 | 1970 | 955 | 892 |
| 5 - 10 µ | 70 | 461 | 223 | 208 |
| 10 - 20 µ | 13 | 31 | 25 | 22 |
| 20 - 25 µ | 12 | 31 | 19 | 14 |
| 25 - 50 µ | 3 | 2 | 2 | 0 |
| nombre total 0 - 50 µ | 1108 | 6522 | 4111 | 4116 |

Ce tableau montre que le traitement suivant l'invention provoque la formation de cristaux (en l'occurence de $CaCO_3$) de faible granulométrie (essentiellement de granulométrie inférieure à 10µ) et qu'une fois l'eau traitée, le chauffage de celle-ci ne provoque sensiblement aucun accroissement du nombre de cristaux, ni un accroissement de la granulométrie des cristaux.

L'expérience a également montré que les cristaux formés par le traitement suivant l'invention n'avaient pas tendance à former des incrustations dans les canalisations.

Un générateur du type représenté à la figure 1 a été utilisé pour traiter l'eau circulant dans des échangeurs thermiques de système de refroidissement de galets de support de four industriel rotatif et dans des échangeurs air/eau d'un moteur annulaire.

Avant le traitement des échangeurs air/eau, le débit maximal d'eau dans l'échangeur était de 44 m³/h 4 et 6 mois après le début du traitement des échangeurs, le débit maximal d'eau était respectivement de 49 m³/h et 53 m³/h. De plus, on a remarqué que l'échangeur après traitement permettait une meilleure évacuation de la chaleur. 6 mois après le traitement au moyen d'un débit de 53 m³/h au lieu de 44 m³/h, il a été possible d'accroître de 40% la chaleur dissipée.

Cet essai démontre également que le générateur suivant l'invention permet d'éliminer des dépôts de cal caire, cette élimination permettant un débit d'eau plus important et un meilleur transfert de chaleur.

Il va de soi qu'au lieu d'utiliser un manchon à titre de moyen de transfert, on aurait pu utiliser un treillis, un feuillard, une tige, un ruban, fil, etc.

Le moyen de transfert est avantageusement mini d'une couche de diélectrique (PVC...) l'épaisseur de ladite couche étant fonction de la surface du moyen de transfert et étant avantageusement calculée pour obtenir une capacité comprise entre 150 picofarahs et 50 nanofarahs.

Le procédé de traitement suivant l'invention est avantageusement combiné avec une étape de traitement physique du milieu, par exemple avant son traitement par une générateur selon l'invention, et/ou avec une étape de séparation des cristaux formés lors du traitement suivant l'invention.

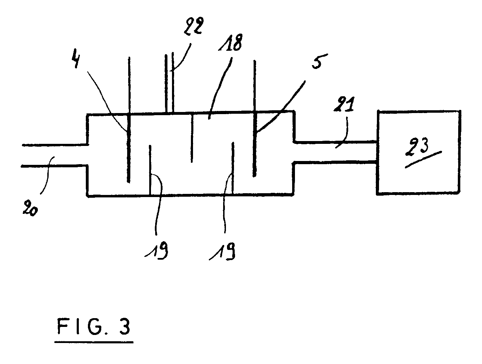

Un dispositif combinant le traitement suivant l'invention et d'autres traitements est représenté à la figure 3.

Ce dispositif comporte une chambre 18 munie de chicanes ou déflecteurs 19 de manière à assurer un mouvement sensiblement turbulent du milieu à traiter.

Le milieu à traiter est amené par un conduit 20 à la chambre et sort de cette dernière par un conduit 21.

Dans la chambre sont placés deux moyens de transfert 4,5 constitués d'une grille recouverte d'un film nylon. Ces moyens de transfert sont reliés à un générateur de signaux suivant l'invention.

Dans cette chambre, des additifs sont amenés par la canalisation 22, ces additifs servent à amener le milieu dans un état favorisant le traitement selon le procédé suivant l'invention. De tels additifs permettent par exemple de contrôler ou modifier la teneur du milieu en $O_2$, Si, Fe, le pH du milieu, sa conductibilité, etc.

Lorsque le milieu traité sort de la chambre 18, le milieu contient des cristaux. Ces derniers sont alors avantageusement piégés dans un dispositif 23. Un tel dispositif est par exemple un filtre, un décanteur, un hydrocyclone ou tout autre système de séparation solide-liquide, ou encore une combinaison de ceux-ci.

## Revendications

1. Procédé de traitement d'un milieu aqueux dans lequel on soumet ledit milieu à l'action d'un champs électrique créé entre au moins deux moyens de transfert (4,5) de manière à modifier la nucléation et/ou la formation et/ou la croissance de cristaux, en particulier de $CaCO_3$, au moins un desdits moyens de transfert recevant des signaux électriques sensiblement rectangulaires comprenant une première phase dans laquelle le signal est voisin d'un niveau inférieur (I) et une deuxième phase dans laquelle le signal est voisin d'un niveau supérieur (II), caractérisé en ce que lesdits signaux présentent lorsqu'ils sont voisins du niveau supérieur (II) ou du niveau inférieur (I), une onde de potentiel amortie, en ce que ladite onde passe par un niveau maximal de potentiel et un niveau minimum de potentiel, la différence de potentiel entre ledit niveau maximum et ledit niveau minimum étant comprise entre 10 et 35V, et en ce que le temps de vie de l'onde amortie est compris entre 100 nanosecondes et 100 µs pour une onde rectangulaire de fréquence comprise entre 1000 Hz et 30.000 Hz.

2. Procédé suivant la revendication 1, caractérisé en ce que lesdits signaux présentent une onde amortie telle que définie à la revendication 1, lorsqu'ils sont voisins du niveau inférieur.

3. Procédé suivant la revendication 1, caractérisé en ce que lesdits signaux présentent une onde amortie telle que définie à la revendication 1, lorsqu'ils sont voisins du niveau inférieur et du niveau supérieur.

4. Procédé suivant l'une des revendications 1 à 3, caractérisé en ce que le temps de vie de l'onde amortie est compris entre 5 µs et 100 µs, et est de préférence d'environ 5 µs.

5. Procédé suivant l'une quelconque des revendications précédentes, caractérisé en ce que les signaux sont des signaux rectangulaires à flancs raides, le passage du signal du niveau inférieur vers le niveau supérieur et inversement est effectué sur une période de temps inférieure à 50 nanosecondes.

6. Procédé suivant l'une quelconque des revendications précédentes, caractérisé en ce que en ce que les signaux correspondent à la superposition d'une onde rectangulaire comprise entre 1.000 et 30.000 Hz, et d'une onde sinusoïdale amortie de fréquence supérieure à 100.000 Hz.

7. Procédé suivant la revendication 6, caractérisé en ce que l'amortissement de l'onde sinusoïdale est tel qu'après 5 périodes, l'amplitude de la variation est inférieure à 10 % de la variation initiale.

8. Procédé suivant l'une quelconque des revendications 2 à 7, caractérisé en ce que la différence de potentiel (V) existant entre le niveau inférieur (I) et le niveau supérieur (II) de l'onde est comprise entre 12 et 200 V, de préférence entre 12 et 60 V.

9. Procédé suivant la revendication 8, caractérisé en ce que la fréquence de l'onde amortie est supérieure à celle de l'onde rectangulaire.

10. Générateur pour la mise en oeuvre d'un procédé suivant l'une quelconque des revendications 1 à 9, ledit générateur étant relié à deux moyens de transfert (4,5) et comprenant
un premier moyen (19) transformant un signal d'une source de courant (3) en une onde sensiblement rectangulaire ;

un deuxième moyen (11) transformant un signal d'une source de courant en une onde amortie ;

un moyen de superposition (12) de l'onde rectangulaire et de l'onde amortie, et

un système (13) reliés auxdits premier et deuxième moyens (9,11) et au moyen de superposition (12) de manière à ce que, lorsqu'un premier capteur (14) du système (13) détecte le passage du niveau inférieur (1) au niveau supérieur (II) ou inversement de l'onde rectangulaire, il commande une porte (16) pour permettre l'envoi de l'onde amortie vers le moyen de superposition (12) et de manière à ce que, lorsqu'un deuxième capteur (13) détecte un niveau de variation de l'onde amortie inférieure à un niveau prédéterminé, le deuxième capteur (15) commande une porte (17) de manière à couper l'envoi de l'onde amortie vers le moyen de superposition (12).

11. Générateur suivant la revendication 10, caractérisé en ce qu'il comporte un commutateur (10) permettant le passage du signal du niveau inférieur (I) au niveau supérieur (II) ou inversement sur une période de temps inférieure à 50 nanosecondes.

12. Générateur suivant la revendication 10 ou 11, caractérisé en ce que le deuxième moyen (11) génère une onde sinusoïdale amortie.

13. Générateur suivant l'une des revendications 10 à 12, caractérisé en ce que les moyens de transfert comprennent une couche de matière diélectrique.

14. Générateur suivant la revendication 13, caractérisé en ce que l'épaisseur du diélectrique est telle que le moyen de transfert forme une capacitance comprise entre 150 picofarah et 50 nanofarah.

**Claims**

1. Method of treating an aqueous medium in which the said medium is subjected to the action of an electric field created between at least two transfer means (4, 5) so as to modify the nucleation and/or formation and/or growth of crystals, in particular of $CaCO_3$, at least one of the said transfer means receiving substantially rectangular electrical signals comprising a first phase in which the signal is close to a lower level (I) and a second phase in which the signal is close to an upper level (II), characterized in that the said signals, when they are close to the upper level (I) or to the lower level (I), exhibit a damped potential wave, in that the said wave passes through a maximum potential level and a minimum potential level, the potential difference between the said maximum level and the said minimum level being between 10 and 35 V and in that the lifetime of the damped wave is between 100 nanoseconds and 100 $\mu$s for a rectangular wave having a frequency of between 1000 Hz and 30,000 Hz.

2. Method according to Claim 1, characterized in that the said signals exhibit a damped wave, as defined in Claim 1, when they are close to the lower level.

3. Method according to Claim 1, characterized in that the said signals exhibit a damped wave, as defined in Claim 1, when they are close to the lower level and to the upper level.

4. Method according to one of Claims 1 to 3, characterized in that the lifetime of the damped wave is between 5 $\mu$s and 100 $\mu$s and is preferably approximately 5 $\mu$s.

5. Method according to any one of the preceding claims, characterized in that the signals are rectangular signals with steep edges, the passage of the signal from the lower level to the upper level and conversely takes place over a time period of less than 50 nanoseconds.

6. Method according to any one of the preceding claims, characterized in that the signals correspond to the superposition of a rectangular wave of between 1,000 and 30,000 Hz and of a damped sinusoidal wave having a frequency greater than 100,000 Hz.

7. Method according to Claim 6, characterized in that the damping of the sinusoidal wave is such that, after 5 periods, the amplitude of the variation is less than 10% of the initial variation.

8. Method according to any one of Claims 2 to 7, characterized in that the potential difference (V) existing between the lower level (I) and the upper level (II) of the wave is between 12 and 200 V, preferably between 12 and 60 V.

9. Method according to Claim 8, characterized in that the frequency of the damped wave is greater than that of the rectangular wave.

10. Generator for the implementation of a method according to any one of Claims 1 to 9, the said generator being connected to two transfer means (4, 5) and comprising:

a first means (9) converting a signal from a current source (3) into a substantially rectangular wave;

a second means (11) converting a signal from a current source into a damped wave;

a means (12) of superimposing the rectangular wave and the damped wave; and

a system (13) which is connected to the first and second means (9, 11) and to the superposition means (12) so that, when a first sensor (14) of the system (13) detects the passage from the lower level (I) to the upper level (II) of the rectangular wave or conversely, it operates a gate (16) in order to allow the sending of the damped wave to the superposition means (12) and so that, when a second sensor (13) detects a variation level of the damped wave less than a predetermined level, the second sensor (15) operates a gate (17) so as to cut the sending of the damped wave to the superposition means (12).

11. Generator according to Claim 10, characterized in that it includes a switch (10) allowing the signal to pass from the lower level (I) to the upper level (II) or conversely over a time period of less than 50 nanoseconds.

12. Generator according to Claim 10 or 11, characterized in that the second means (11) generates a damped sinusoidal wave.

13. Generator according to one of Claims 10 to 12, characterized in that the transfer means comprise a layer of dielectric material.

14. Generator according to Claim 13, characterized in that the thickness of the dielectric is such that the transfer means forms a capacitor of between 150 picofarads and 50 nanofarads.

**Patentansprüche**

1. Verfahren zur Behandlung eines wässerigen Mediums, bei dem man auf das Medium ein zwischen mindestens zwei Übertragungsmitteln (4, 5) erzeugtes elektrisches Feld einwirken läßt, um auf diese Weise die Bildung von Kristallisationskeimen und/oder die Bildung und/oder das Wachstum von Kristallen, insbesondere von $CaCO_3$, zu verändern, wobei mindestens eines der Übertragungsmittel im wesentlichen rechteckförmige Signale empfängt, die eine erste Phase, in der das Signal in der Nähe eines unteren Niveaus (I) liegt, und eine zweite Phase aufweisen, in der das Signal in der Nähe eines oberen Niveaus (II) liegt, dadurch gekennzeichnet, daß die Signale während des Zeitraums, in dem sie in der Nähe des oberen Niveaus (II) oder des unteren Niveaus (I) liegen, eine gedämpfte Potentialschwingung aufweisen, die Schwingung einen Potentialhöchstwert und einen Potentialtiefstwert durchläuft, wobei der Potentialunterschied zwischen dem Höchstwert und dem Tiefstwert 10 bis 35 V beträgt, und die Dauer der gedämpften Schwingung bei einer Rechteckschwingung mit einer Frequenz zwischen 1000 Hz und 30 000 Hz zwischen 100 Nanosekunden und 100 µs liegt.

2. Verfahren nach Anspruch 1, dadurch gekennzeichnet, daß die Signale eine wie in Anspruch 1 definierte gedämpfte Schwingung aufweisen, wenn sie in der Nähe des unteren Niveaus liegen.

3. Verfahren nach Anspruch 1, dadurch gekennzeichnet, daß die Signale eine wie in Anspruch 1 definierte gedämpfte Schwingung aufweisen, wenn sie in der Nähe des unteren Niveaus und des oberen Niveaus liegen.

4. Verfahren nach einem der Ansprüche 1 bis 3, dadurch gekennzeichnet, daß die Dauer der gedämpften Schwingung zwischen 5 µs und 100 µs liegt und vorzugsweise etwa 5 µs beträgt.

5. Verfahren nach einem der vorhergehenden Ansprüche, dadurch gekennzeichnet, daß die Signale Rechtecksignale mit steilen Flanken sind, wobei der Übergang des Signals vom unteren Niveau zum oberen Niveau und umgekehrt in einer Zeitspanne von weniger als 50 Nanosekunden stattfindet.

6. Verfahren nach einem der vorhergehenden Ansprüche, dadurch gekennzeichnet, daß die Signale der Überlagerung einer Rechteckschwingung von 1000 bis 30 000 Hz mit einer gedämpften Sinusschwingung mit einer Frequenz von mehr als 100 000 Hz entsprechen.

7. Verfahren nach Anspruch 6, dadurch gekennzeichnet, daß die Dämpfung der Sinusschwingung so beschaffen ist, daß die Amplitude der Änderung nach 5 Schwingungsperioden weniger als 10 % der anfänglichen Änderung beträgt.

8. Verfahren nach einem der Ansprüche 2 bis 7, dadurch gekennzeichnet, daß der zwischen dem unteren Niveau (I) und dem oberen Niveau (II) bestehende Potentialunterschied (V) der Schwingung zwischen 12 und 200 V, vorzugsweise zwischen 12 und 60 V, beträgt.

9. Verfahren nach Anspruch 8, dadurch gekennzeichnet, daß die Frequenz der gedämpften Schwingung größer ist als die der Rechteckschwingung.

10. Generator zur Durchführung eines Verfahrens nach einem der Ansprüche 1 bis 9, wobei der Generator mit zwei Übertragungsmitteln (4, 5) verbunden ist und folgende Mittel umfaßt:
ein erstes Mittel (9), das ein Signal aus einer Stromquelle (3) zu einer im wesentlichen rechteckförmigen Schwingung umformt,
ein zweites Mittel (11), das ein Signal aus einer Stromquelle in eine gedämpfte Schwingung umformt,
ein Mittel (12) zur Überlagerung der Rechteckschwingung und der gedämpften Schwingung und
ein System (13), das mit dem ersten und zweiten Mittel (9, 11) und dem Überlagerungsmittel (12) derart verbunden ist, daß ein erster Meßfühler (14) des Systems (13) bei Erfassung des Übergangs der Rechteckschwingung vom unteren Niveau (I) zum oberen Niveau (II) oder umgekehrt ein Verknüpfungsglied (16) betätigt, wodurch die gedämpfte Schwingung zum Überlagerungmittel (12) durchgelassen wird, und daß ein zweiter Meßfühler (15) bei Erfassung eines Schwankungsniveaus, das niedriger ist als das vorbestimmte Niveau, ein Verknüpfungsglied (17) betätigt, wodurch der Durchlaß der gedämpften Schwingung zum Überlagerungsmittel (12) unterbrochen wird.

11. Generator nach Anspruch 10, dadurch gekennzeichnet, daß er einen Schalter (10) aufweist, der während einer Zeitspanne von weniger als 50 Nanosekunden den Übergang des Signals vom unteren Niveau (I) zum oberen Niveau (II) oder umgekehrt ermöglicht.

12. Generator nach Anspruch 10 oder 11, dadurch gekennzeichnet, daß das zweite Mittel (11) eine gedämpfte Sinusschwingung erzeugt.

13. Generator nach einem der Ansprüche 10 bis 12, dadurch gekennzeichnet, daß die Übertragungsmittel eine Schicht aus dielektrischem Material aufweisen.

14. Generator nach Anspruch 13, dadurch gekennzeichnet, daß die Schichtdicke des Dielektrikums so beschaffen ist, daß das Übertragungsmittel eine Kapazität zwischen 150 Picofarad und 50 Nanofarad erzeugt.

FIG. 1

FIG. 2

EP 0 515 346 B1

FIG. 3